# EUROPÄISCHE PATENTSCHRIFT

(11) **EP 0 877 978 B1**
(45) Veröffentlichungstag und Bekanntmachung des Hinweises auf die Patenterteilung: **28.07.1999**
(21) Anmeldenummer: 97914090.2
(22) Anmeldetag: 28.01.1997
(51) Int. Cl.: G06F 1/18, G11B 33/12

(54) **EINSCHUB FÜR FESTPLATTENLAUFWERKE FÜR "HOT-REPLACE"-FUNKTION**
SLIDE-IN RACK FOR A HARD-DISK DRIVE WITH A "HOT-REPLACE" CAPABILITY
TIROIR D'UNITE DE DISQUE DUR PERMETTANT LE REMPLACEMENT EN COURS D'UTILISATION

(30) Priorität: 29.01.1996 DE 19603092
(43) Veröffentlichungstag der Anmeldung: 18.11.1998
(73) Patentinhaber: Siemens Nixdorf Informationssysteme AG, 33106 Paderborn (DE)
(72) Erfinder: GÖTZFRIED, Manfred, D-86343 Königsbrunn (DE); KÄSMAYR, Anton, D-86441 Zusmarshausen (DE); LANZ, Michael, D-81669 München (DE)
(74) Vertreter: Epping, Wilhelm, Dr.-Ing.
(86) Internationale Anmeldenummer: DE9700154
(87) Internationale Veröffentlichungsnummer: WO9728498

(56) Entgegenhaltungen:
- EP-A- 0 425 170
- WO-A-96/00938
- US-A- 4 754 397
- US-A- 5 277 615
- US-A- 5 349 483
- IBM TECHNICAL DISCLOSURE BULLETIN, Bd. 38, Nr. 8, 1.August 1995, Seite 505/506 XP000534608 "MODULAR DISK FILE STRUCTURE"

## Beschreibung

Die Erfindung betrifft einen Einschub für Festplattenlaufwerke für "Hot-Replace"-Funktion.

Moderne Datenverarbeitungsanlagen gehobener Klasse setzen heute voraus und die moderne Software verlangt, daß Plattenlaufwerke während des Betriebs ausgetauscht und ersetzt werden können. Dies bedeutet, daß auf Schraubmontage verzichtet wird und ein leichtes sowie komfortables Händling den Plattenaustausch problemlos zulassen. Die empfindliche Mechanik der hochkapazitiven Laufwerke läßt ruckartige Bewegungen auch beim Plattentausch nicht zu und würde die Festplatten beschädigen. Unpräzise Führungen zerstören die Komponenten von Steckverbindungen. Eine unvollständige allseitige Abschirmung beeinträchtigt die Funktionstüchtigkeit der Festplattenlaufwerke.

Aus der Druckschrift US-A-5 277 615 ist ein Einschub für Festplattenlaufwerke für eine "Hot-Replace"-Funktion bekannt, der kontinuierliche Bewegungen beim Einschieben bzw. Herausnehmen des Einschubs prinzipiell erlaubt.

Aufgabe der Erfindung ist es daher, einen Einschub für Festplattenlaufwerke für "Hot-Replace"-Funktion anzugeben, der besonders fein dosierbare kontinuierliche Bewegungen und eine besonders präzise Führung beim Tausch von Festplattenlaufwerken, sowie eine allseitige Abschirmung im eingebauten Zustand gewährleistet.

Diese Aufgabe wird durch einen Einschub gelöst, der die Merkmale des kennzeichnenden Teils des Anspruchs 1 aufweist.

Der Einschub kann in einem Schacht präzise geführt werden. Die Auswerfer erlauben beim Ziehen bzw. Stecken des Einschubs eine kontinuierliche Bewegung. Mit Masse verbindbare seitliche Winkelstücke und die Front abschirmende Schirmbleche ermöglichen die hermetische Abschirmung der Festplattenlaufwerke im eingebauten Zustand.

Vorteilhafte Ausgestaltungen der Erfindung sind Gegenstand von Unteransprüchen.

Anlaufschrägen für Achsansätze der Auswerfer ermöglichen das einfache, schnappbare Einsetzen der Auswerfer in die Front der Gehäuseform des Einschubs. Hinterschnitten ausgeführte Haken an den Schenkelenden der Auswerfer gewährleisten ein sicheres Einhaken an zugeordneten Teilen. Führungsstifte an der an der Heckwand fixierten Flachbaugruppe erhöhen die Präzision der Führung des Einschubs.

Nachfolgend wird ein Ausführungsbeispiel der Erfindung anhand einer Zeichnung näher erläutert. Darin zeigen
- Figur 1: einen Einschub gemäß der Erfindung in einer perspektifischen Gesamtdarstellung,
- Figur 2: einen Einschub nach Figur 1 in einer Explosionsdarstellung, und
- Figur 3: eine turmartige Anordnung bestehend aus mehreren Einschüben gemäß der Figur 1 in Seitenansicht.

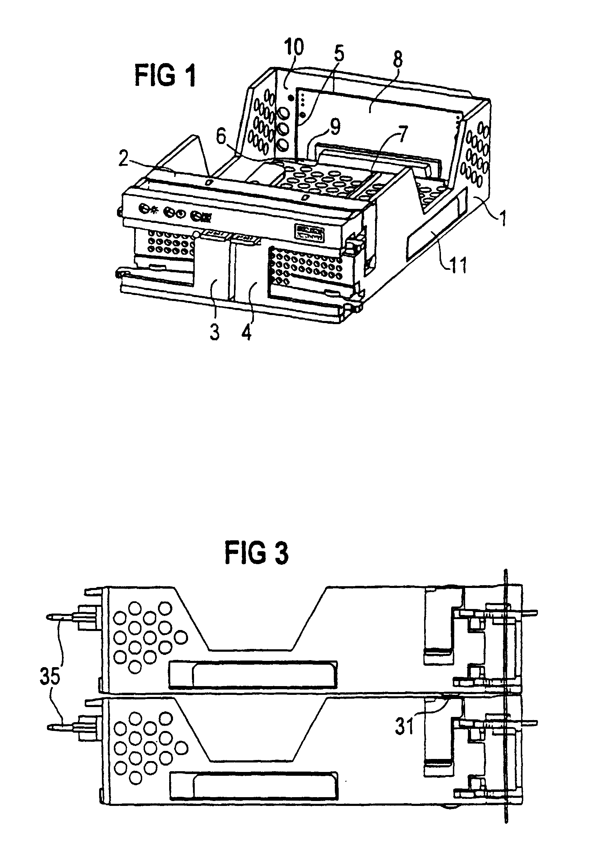

Der in der Figur 1 dargestellte Einschub weist eine schubladenartige Gehäuseform 1 auf und wird auch wie ein Schubladen gehandhabt. Der Einschub wirkt in einem metallischen Kasten, der in der Zeichnung nicht näher dargestellt ist. Der metallische Kasten weist bis auf die Frontseite allseitig eine schirmende Wand auf. Damit ist der Einschub zumindest bis auf die Frontseite durch den metallischen Kasten nach allen Seiten hin geschirmt.

Die Schirmung zur Frontseite hin erfolgt innerhalb des Einschubs. Die Schirmung zur Frontseite hin wird durch ein Front-Schirmblech 2 bewerkstelligt, die hinter der Front der Gehäuseform 1 angeordnet ist. Nähere Angaben zum Front-Schirmblech 2 erfolgen zu einem späteren Zeitpunkt.

An der Front der Gehäuseform 1 sind seitlich in die Front eingeschobene Auswerfer 3, 4 angeordnet, von denen ein erster ein linker Auswerfer 3 und ein zweiter ein rechter Auswerfer 4 ist.

In der Heckwand der Gehäuseform 1 ist eine Aussparung 5 vorgesehen. Der Aussparung 5 sind Stützkanten 6 und 7 zugeordnet. Die Zuordnung ist in der Weise gegeben, daß eine Flachbaugruppe 8 mit einer Sockelkante 9 von schräg außerhalb der Gehäuseform 1 durch die Aussparung 5 zwischen den Stützkanten 6 und 7 zuerst einsetzbar und aufrichtbar und dann angelehnt an Teilen 10 der Heckwand an der Heckwand fixierbar ist.

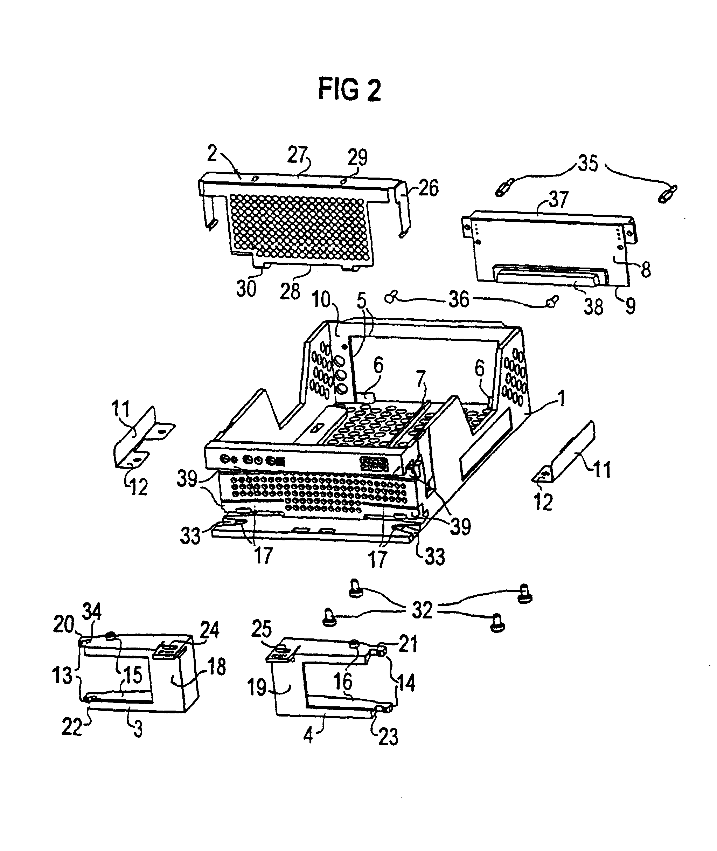

Die Gehäuseform 1 weist an den Seitenwänden seitlich von außen kontaktierbare Kontaktschienen 11 auf mit in Bodennähe in die Gehäuseform 1 ragenden Winkelstücken 12 (Figur 2), die mit Masseflächen eines innerhalb der Gehäuseform 1 anordbaren, in der Zeichnung nicht näher angegebenen Festplattenlaufwerkes elektrisch leitend verbindbar sind.

In der Figur 2 sind einige im Zusammenhang mit der Figur 1 angesprochene Details deutlicher zu erkennen. Insbesondere sind die Auswerfer 3 und 4 klarer zu sehen. Die Auswerfer 3 und 4 sind in Frontansicht U-förmig ausgebildet. An den jeweiligen Schenkelenden sind Haken 13, 14 angeordnet. Ferner sind im Bereich der Schenkelenden an den Schenkeln eines jeweiligen Auswerfers 3 bzw. 4 paarweise Achsansätze 15, 16 angeordnet. Die Achsansätze 15, 16 rasten beim Einschieben der Auswerfer 3, 4 in die Gehäuseform 1 in zugehörige Ausnehmungen 17 an der Gehauseform 1 ein. Die Achsansätze 15, 16 wirken in den Ausnehmungen 17 als Drehachsen. Die Wirkung ist derart, daß die Auswerfer 3, 4 mit von der Frontmitte aus nach vorne und außen bewegbaren Stegen 18, 19 fensterartig öffenbar sind. Die Folge davon ist, daß die an den Schenkelenden angeordneten Haken 13, 14 von einer die seitlichen Maße der Gehäuseform 1 überragenden Position (vgl. Figur 1) in eine innerhalb der äußeren Maße der Gehäuseform 1 angeordneten Position bewegbar sind. Eine weitere Folge hierbei ist, daß Rückenkanten 20, 21 der Haken 13, 14 durch seitlich die äußeren Maße der Gehäuseform 1 überragende Überstehkanten 22, 23 an den Spitzen der Schenkelenden der U-förmigen Auswerfer 3, 4 ersetzt sind.

Die Stege 18, 19 weisen eine solche Breite, Tiefe und Ausnehmung auf, daß die Stege 18, 19 wenigstens von menschlichen Zeigefingern hintergreifbar sind.

Die Auswerfer 3, 4 weisen oberhalb der Stege 18, 19 nach vorne die Front überragende Federfinger 24, 25 auf. Auf den Deckflächen der Federfinger 24, 25 sind zum Einrasten in innerhalb der Gehäuseform 1 angeordneten Ausnehmungen in einer Verriegelungsposition der Auswerfer 3, 4 Rastnasen angeordnet. Zum Bewegen der Auswerfer 3, 4 aus der Verriegelungsposition werden die Federfinger 24, 25 beispielsweise mit den menschlichen Daumen nach unten gedrückt. Damit nehmen die Federfinger 24, 25 eine abgesenkte Stellung ein, wodurch die Rastnasen aus den zugehörigen Ausnehmungen in der Gehäuseform 1 gleiten.

Das hinter der Front der Gehäuseform 1 angeordnete Front-Schirmblech 2 weist seitliche Armteile 26 auf, die über die Seitenwände der Gehäuseform 1 greifend angeordnet sind. Teile der Armteile 26 greifen von außerhalb der Gehäuseform 1 kommend in Aussparungen an den Seitenwänden der Gehäuseform 1 ein. Diese Teile schnappen dabei in den Aussparungen federnd ein und fixieren dadurch das Front-Schirmblech 2. Durch den federnden Einschnappmechanismus kann das Front-Schirmblech 2 leicht wieder gelöst und entfernt werden.

An einer Oberkante 27 und einer Unterkante 28 des Front-Schirmbleches 2 sind Kontaktbuckel 29, 30 ausgebildet. Für die Kontaktbuckel 30 an der Unterkante 28 des Front-Schirmbleches 2 sind im Boden der Gehäuseform 1 Aussparungen vorgesehen, durch die die angesprochenen Kontaktbuckel 30 hindurchgreifen und die äußeren Maße der Gehäuseform 1 überragen können. Insbesondere die an der Unterkante 28 des Front-Schirmbleches 2 angeordneten Kontaktbuckel 30 sind federnd ausgebildet.

In einer in der Figur 3 dargestellten Anordnung, in der mehrere Einschübe turmartig übereinander angeordnet sind, kontaktieren Kontaktbuckel 30 an der Unterkante 28 eines oberen Einschubes die Kontaktbuckel 29 an der Oberkante 27 eines unteren Einschubes. In der Figur 3 bezeichnet der Berührungspunkt 31 die beschriebene Stelle.

Wird das oberste Front-Schirmblech 2 eines obersten Einschubs von entsprechenden mit einem Einschubgehäuse verbundenen Kontaktbuckel kontaktiert und kontaktieren die Kontaktbuckel 30 an der Unterkante 28 eines untersten Einschubes einer Anordnung gemäß der Figur 3 wieder das Einschubgehäuse, ist eine vollständige Abschirmung auch an der Frontseite der Einschübe gegeben. Eine weitere Verbesserung der Abschirmung wird erzielt, wenn die Armteile 26 der Front-Schirmbleche 2 seitlich ebenfalls kontaktiert sind. Kontaktieren weiter mit dem Einschubgehäuse verbundene Federn die Kontaktschienen 11 der Einschübe, sind die in den Einschüben angeordneten Festplattenlaufwerke erdenbar. Die Erdung erfolgt über die Winkelstücke 12, die mit Schrauben 32 an Masseteile der Festplattenlaufwerke schraubbar sind.

Zum seitlichen Einschieben der Auswerfer 3, 4 sind für die Achsansätze 15, 16 der Auswerfer 3, 4 Auflaufschrägen 33 vorgesehen, durch die die Schenkel der U-förmigen Auswerfer 3, 4 in eine zusammengedrückte Stellung gebracht sind, bevor sie in die zugehörigen Ausnehmungen 17 an der Gehäuseform 1 einrasten.

Die Haken 13, 14 an den Schenkelenden der Auswerfer 3, 4 weisen Hinterschneidkanten 34 auf, durch die eine verbesserte Greifwirkung erzielt wird.

An der an der Heckwand fixierten Flachbaugruppe 8 können gegenüber der Gehäuseform 1 parallel zur Einschubrichtung nach außen weisende Führungsstifte 35 vorgesehen sein, die die Führungseigenschaften des Einschubs verbessern. Schrauben 36 können dabei in einem Arbeitsgang sowohl die Flachbaugruppe 8 an der Heckwand fixieren als auch die Führungsstifte 35 halten. Vorteilhafterweise stehen die Führungsstifte 35 mit einer Steckerleiste 37 in Verbindung, so daß eine präzise Führung für die Kontakte der Steckerleiste 37 gegeben ist.

Zur Vervollständigung der Beschreibung sei noch eine weitere Steckerleiste 38 erwähnt, über die ein im Einschub angeordnetes Festplattenlaufwerk kontaktiert ist. Die elektrische Verbindung nach außen hin erfolgt über die Flachbaugruppe 8, die die beiden Steckerleisten 37 und 38 miteinander verbindet.

Nachfolgend werden einige Montageschritte näher erläutert.

Die Auswerfer 3, 4 werden seitlich in die Front der Gehäuseform 1 eingeschoben. Dazu werden die Teile so eingelegt, daß sie automatisch mit ihren Achsansätzen 15, 16 neben den Auflaufschrägen 33 der Gehäuseform 1 zum Liegen kommen. Durch Querziehen der Auswerfer 3, 4 zur Mitte hin, werden die Schenkel der Auswerfer 3, 4 nach oben bzw. unten gedrückt. Hierdurch werden Federflächen 39 (Figur 2) der Gehäuseform 1 nach hinten gebogen. Der Weg zum Einschnappen der Achsansätze 15, 16 in die Ausnehmungen 17 wird dadurch frei. Mit der Zentrierung der Achsansätze 15, 16 in den Ausnehmungen 17 drükken sich die Schenkel der Auswerfer 3, 4 wieder auseinander. Damit können die Federflächen 39 wieder in ihre Ruhestellung nach vorne zurückkehren. Die Schenkel der Auswerfer 3, 4 können nun nicht mehr zusammengedrückt werden. Ein unbeabsichtigtes Aushängen ist damit nicht mehr möglich.

Das Drücken auf die Frontflächen der Stege 18, 19 der Auswerfer 3, 4 bewirkt ein Verschnappen der Rastnasen auf den Deckflächen der Federfinger 24, 25 in der Gehäuseform 1.

Zur Montage des Front-Schirmbleches 2 werden die Armteile 26 auseinandergebogen und über die Seitenwände der Gehäuseform 1 nach unten gebracht. Durch das Zusammendrücken der Armteile 26 wird ein Einhaken des Front-Schirmbleches 2 in die seitlichen Öffnungen der Gehäuseform 1 erreicht.

Zur Montage der Flachbaugruppe 8 wird die Flachbaugruppe 8 schräg von hinten zwischen den Stützkanten 6, 7 in Position gebracht. Durch senkrechtes Aufrichten der Flachbaugruppe 8 können die beiden Schrauben 36, von innerhalb der Gehäuseform 1, durch entsprechend zugeordnete Löcher geführt werden. Das Aufschrauben der beiden Führungsstifte 35 auf die beiden Schrauben 36 befestigt die Flachbaugruppe 8.

Zur Montage der Kontaktschienen 11 wird ein Festplattenlaufwerk von oben in die Gehäuseform 1 eingelegt. Durch dessen Verschieben nach hinten werden die vielpoligen Steckerteile von Festplattenlaufwerk und Flachbaugruppe 8 miteinander verbunden. Beide Kontaktschienen 11 werden anschließend seitlich durch beispielsweise Schlitze der Gehäuseform 1 geschoben. Durch Zusammenflanschen von Festplattenlaufwerk und Winkelstücken 12 der Kontaktschienen 11, mittels der Schrauben 32, wird der Massekontakt des Festplattenlaufwerkes flächig zu den Außenseiten gebracht.

Bezüglich des Einsetzens des Einschubs in einen Laufwerksschacht wird folgendes ausgeführt.

Die Auswerfer 3, 4 werden zunächst gelöst. Hierzu ist mit den Daumen auf die Vorderkanten der Deckflächen der Federfinger 24, 25 zu drücken und sind die Auswerfer 3, 4 fensterartig zu öffnen, bis sie parallel zur Einschubrichtung stehen. Der gesamte Einschub wird in die gewünschte Position des Laufwerksschachtes gesteckt, bis die Überstehkanten 22, 23 der Auswerfer 3, 4 an einer Gehäusewand des Laufwerksschachtes zum Anliegen kommen. Durch Schwenken der Auswerfer 3, 4 greifen die Haken 13, 14 in Gegenhalter am Laufwerksschacht, so daß der Einschub mittels der Haken 13, 14 in den Schacht gezogen wird. Hierbei positionieren die voreilenden Führungsstifte 35 die Steckverbinder für den Einschub und einem rückseitigen Platter. Die einschnappenden Auswerfer 3, 4 verriegeln den Einschub im Laufwerksschacht und beenden den erschütterungsfreien Einbau. Erst das Drücken auf die Vorderkanten der Deckflächen der Federfinger 24, 25 der Auswerfer 3, 4 mit gleichzeitigem Schwenken der Auswerfer 3, 4 ermöglicht das Lösen des Einschubes. Das Abdrücken mittels der Rückenkanten 20, 21 an einem inneren Gehäuseteil des Laufwerksschachtes drückt den Einschub aus dem Stecker des rückseitigen Platters.

Im eingebauten Zustand des Einschubs sind die Kontaktschienen 11 mit Federn mit den Seitenwänden des Laufwerksschachtes kontaktiert und stellen so einen gewünschten Massekontakt zwischen Festplattenlaufwerk und Laufwerksschacht bzw. Gehäuse der Gesamtanlage her.

Weiter stellen im eingebauten Zustand des Einschubs die Front-Schirmbleche 2 eine geschlossene frontale Schirmfläche her. Jedes Front-Schirmblech 2 hat, wie bereits angesprochen, 6 Kontaktpunkte. Davon werden 2 Kontaktpunkte durch Prägungen auf der Oberseite mit den Fußfedern des darüberliegenden Front-Schirmbleches 2 des darüberliegenden Einschubs hergestellt. So hat jeder Einschub 2 obere und 2 untere Schirmkontakte. Außerdem kontaktieren die Seitenflächen der Armteile 26 jeden Front-Schirmbleches 2 mit jeweils einer Feder im Laufwerksschacht.

## Patentansprüche

1. Einschub für Festplattenlaufwerke für ,,Hot-Replace"-Funktion mit schubladenartiger Gehäuseform (1) mit an Schenkelenden von Auswerfern (3,4) mit von menschlichen Fingern hintergreifbaren Stegen (18,19) angeordneten Haken (13,14), **dadurch gekennzeichnet**, daß die schubladenartige Gehäuseform (1),
a) an der Front seitlich in die Front eingeschobene Auswerfer (3,4) aufweist, die in Frontansicht U-förmig ausgebildet sind
1) mit im Bereich der Schenkelenden an den Schenkeln eines jeweiligen Auswerfers (3,4) paarweise angeordneten Achsansätzen (15,16), die beim Einschieben in die Gehäuseform (1) in zugehörige Ausnehmungen (17) an der Gehäuseform (1) einrasten und dort als Drehachsen für die Auswerfer (3,4) wirken, derart, daß die Auswerfer (3,4) mit von der Frontmitte aus nach vorne und außen bewegbaren Stegen (18,19) fensterartig öffenbar sind mit einer solchen Folge, daß die an den Schenkelenden angeordneten Haken (13,14) von einer die seitlichen Maße der Gehäuseform (1) überragenden Position in eine innerhalb der äußeren Maße der Gehäuseform (1) angeordneten Position bewegbar sind mit einer solchen weiteren Folge, daß Rückenkanten (20,21) der Haken (13,14) durch seitlich die äußeren Maße der Gehäuseform (1) überragende Überstehkanten (22,23) an den Spitzen der Schenkelenden der U-förmigen Auswerfer (3,4) ersetzt sind, und
2) mit oberhalb der Stege (18,19) angeordneten und nach vorne die Front überragenden, auf der Deckfläche zum Einrasten in innerhalb der Gehäuseform (1) angeordneten Aussparungen in einer Verriegelungsposition der Auswerfer (3, 4) Rastnasen aufweisenden Federfingern (24,25), die zum Bewegen der Auswerfer (3,4) mit menschlichen Daumen in eine abgesenkte Position gebracht sind,
b) hinter der Front ein Front-Schirmblech (2) aufweist
1) mit seitlichen Armteilen (26), die über die Seitenwände der Gehäuseform (1) greifend angeordnet und mit Teilen von außerhalb der Gehäuseform kommend innerhalb von Aussparungen an den Seitenwänden einschnappend fixiert sind, und
2) mit Ober- sowie im Zusammenwirken mit Aussparungen im Boden der Gehäuseform mit Unterkanten (27,28), an denen jeweils Kontaktbuckel (29,30) ausgebildet sind, von denen wenigstens die der Unterkante (28) zugeordneten Kontaktbuckel (30) die äußeren Maße der Gehäuseform (1) überragen,
c) in der Heckwand eine Aussparung (5) mit zugeordneten Stützkanten (6,7) aufweist, derart, daß eine Flachbaugruppe (8) mit einer Sockelkante (9) von schräg außerhalb der Gehäuseform (1) durch die Aussparung (5) zwischen den Stützkanten (6,7) zuerst einsetzbar und aufrichtbar und dann angelehnt an Teilen (10) der Heckwand an der Heckwand fixierbar ist, und
d) an den Seitenwänden seitlich von außen kontaktierbare Kontaktschienen (11) mit in Bodennähe in die Gehäuseform (1) ragenden Winkelstücken (12) aufweist, die mit Masseflächen eines innerhalb der Gehäuseform (1) angeordneten Festplattenlaufwerkes elektrisch leitend verbindbar sind.

2. Einschub nach Anspruch 1, **dadurch gekennzeichnet,** daß zum seitlichen Einschieben der Auswerfer (3,4) für die Achsansätze (15,16) der Auswerfer (3,4) Auflaufschrägen (33) vorgesehen sind, durch die die Schenkel der U-förmigen Auswerfer (3,4) in eine zusammengedrückte Stellung gebracht sind, bevor sie in die zugehörigen Ausnehmungen (17) an der Gehäuseform (1) eingerastet sind.

3. Einschub nach Anspruch 1 oder 2, **dadurch gekennzeichnet**, daß die Haken (13,14) an den Schenkelenden der Auswerfer (3,4) Hinterschneidkanten (34) aufweisen.

4. Einschub nach einem der vorherigen Ansprüche, **dadurch gekennzeichnet**, daß die an der Heckwand fixierte Flachbaugruppe (8) gegenüber der Gehäuseform (1) nach außen weisende Führungsstifte (35) aufweist.

## Claims

1. Slide-in rack for hard-disk drives with a "hot-replace" capability, having a drawer-like form of housing (1) with hooks (13, 14) arranged at the ends of legs of ejectors (3, 4) with cross-pieces (18, 19) which can be gripped behind by human fingers, characterized in that the drawer-like form of housing (1)
a) has, on the front, ejectors (3, 4) pushed laterally into the front and of a U-shaped design in front view
1) having, in the region of the ends of the legs, journals (15, 16) which are arranged in pairs on the legs of a respective ejector (3, 4) and, during sliding into the form of housing (1), clip into associated recesses (17) on the form of housing (1) and act there as pivots for the ejectors (3, 4) in such a way that the ejectors (3, 4) can be opened in a window-like manner by cross-pieces (18, 19) which can be moved forwards and outwards from the centre of the front, with such a consequence that the hooks (13, 14) arranged at the ends of the legs are movable from a position reaching beyond the lateral dimensions of the form of housing (1) into a position arranged within the outer dimensions of the form of housing (1), with such a further consequence that rear edges (20, 21) of the hooks (13, 14) are replaced by overhanging edges (22, 23), reaching laterally over the outer dimensions of the form of housing (1), at the tips of the ends of the legs of the U-shaped ejectors (3, 4), and
2) having resilient fingers (24, 25) which are arranged above the cross-pieces (18, 19), reach forwards beyond the front, have detents arranged on the top surface for clipping into clearances arranged within the form of housing (1) in a locking position of the ejectors (3, 4) and, for moving the ejectors (3, 4), are brought into a lower position by human thumbs,
b) has, behind the front, a front shield (2)
1) having lateral arm parts (26) which are arranged extending over the side walls of the form of housing (1) and are fixed by parts coming from outside the form of housing in a snapping-in manner within clearances on the side walls, and
2) having upper edges (27) and lower edges (28), the latter interacting with clearances in the bottom of the form of housing, on which edges contact studs (29, 30) are respectively formed, of which at least the contact stud (30) assigned to the lower edge (28) reaches beyond the outer dimensions of the form of housing (1),
c) has, in the rear wall, a clearance (5) with assigned supporting edges (6, 7), in such a way that a flat module (8) can firstly be inserted by a base edge (9) from obliquely outside the form of housing (1) through the clearance (5) between the supporting edges (6, 7) and can be raised into an upright position and then can be fixed to the rear wall, leant against parts (10) of the said rear wall, and
d) has, on the side walls, contact rails (11) which can be contacted laterally from outside and have angle pieces (12) which reach into the form of housing (1) near the bottom and can be connected electrically conductively to earthing areas of a hard-disk drive arranged within the form of housing (1).

2. Slide-in rack according to Claim 1, characterized in that, for the lateral sliding in of the ejectors (3, 4), running-up slopes (33) are provided for the journals (15, 16) of the ejectors (3, 4), by means of which slopes the legs of the U-shaped ejectors (3, 4) are brought into a pressed-together position before they are clipped into the associated recesses (17) on the form of housing (1).

3. Slide-in rack according to Claim 1 or 2, characterized in that the hooks (13, 14) at the ends of the legs of the ejectors (3, 4) have undercut edges (34).

4. Slide-in rack according to one of the preceding claims, characterized in that the flat module (8) fixed to the rear wall has, with respect to the form of housing (1), outwardly pointing guide pins (35).

## Revendications

1. Tiroir d'unité de disque dur permettant le remplacement en cours d'utilisation, comportant un boîtier (1) moulé du genre tiroir, comprenant des crochets (13, 14) disposés aux extrémités des branches d'extracteurs (3, 4) dont les parties (18, 19) médianes peuvent être prises par derrière par des doigts d'un utilisateur, **caractérisé** en ce que le boîtier (1) moulé du genre tiroir
a) comporte en façade des extracteurs (3, 4) qui sont enfilés latéralement dans la façade et qui sont réalisés en forme de U en vue de devant,
1) comprenant des bouts (15, 16) d'axes disposés par paires dans la région des extrémités des branches d'un extracteur (3, 4) respectif, qui s'encliquettent lors de l'enfilage dans le boîtier (1) moulé dans des évidements (17) associés sur le boîtier (1) moulé et y jouent le rôle d'axes de rotation pour les extracteurs (3, 4), de telle sorte que les extracteurs (3, 4) peuvent être ouverts à la manière de fenêtres par des parties (18, 19) médianes pouvant être déplacées vers l'avant et l'extérieur à partir du milieu de la façade, ce qui a pour conséquence que les crochets (13, 14) disposés aux extrémités des branches peuvent être déplacés d'une position dépassant des dimensions latérales du boîtier (1) moulé en une position à l'intérieur des dimensions extérieures du boîtier (1) moulé, ce qui a pour conséquence supplémentaire que des arêtes (20, 21) arrière des crochets (13, 14) sont remplacées par des arêtes (22, 23) en saillie à l'avant des extrémités des branches des extracteurs (3, 4) en forme de U, arêtes qui dépassent latéralement des dimensions extérieures du boîtier (1) moulé,
2) et comprenant des doigts (24, 25) élastiques, disposés au-dessus des parties (18, 19) médianes, dépassant de la façade vers l'avant et comportant sur leur face supérieure des ergots de crantage destinés à s'encliqueter, dans une position de verrouillage des extracteurs (3, 4), dans des évidements disposés à l'intérieur du boîtier (1) moulé, doigts qui, afin de déplacer les extracteurs (3, 4), sont amenés par les pouces de l'utilisateur dans une position abaissée,
b) comporte en arrière de la façade une tôle (2) de blindage avant
1) comprenant des bras (26) latéraux, qui s'accrochent sur les parois latérales du boîtier (1) moulé et qui, par des parties de bras, sont immobilisés par enclenchement, en venant de l'extérieur du boîtier moulé, à l'intérieur d'évidements sur les parois latérales,
2) et comprenant un bord (27) supérieur ainsi que, en coopération avec des évidements dans le fond du boîtier moulé, un bord (28) inférieur, bords sur lesquels sont formés des bossages (29, 30) de contact respectifs, parmi lesquels au moins les bossages (30) de contact associés au bord (28) inférieur dépassent des dimensions extérieures du boîtier (1) moulé,
c) comporte dans la paroi arrière un évidement (5), auquel des arêtes (6, 7) d'appui sont associées de telle sorte qu'un module (8) plat peut être d'abord inséré, par une arête (9) de socle, en biais de l'extérieur du boîtier (1) moulé par l'évidement (5) entre les arêtes (6, 7) d'appui, et redressé, puis immbilisé sur la paroi arrière en s'adossant contre des parties (10) de la paroi arrière,
d) et comporte, sur les parois latérales, des profilés (11) de contact pouvant être mis en contact latéralement de l'extérieur, pourvus d'équerres (12) dépassant à proximité du fond dans le boîtier (1) moulé, qui peuvent être reliées en conduction électrique à des faces de masse d'une unité de disque dur disposée à l'intérieur du boîtier (1) moulé.

2. Tiroir suivant la revendication 1, **caractérisé** en ce que des biais (33) d'attaque sont prévus, en vue de l'enfilage latéral des extracteurs (3, 4), pour les bouts (15, 16) d'axes des extracteurs (3, 4), biais par lesquels les branches des extracteurs (3, 4) en forme de U sont mises en une position comprimée, avant d'être encliquetées dans les évidements (17) associés sur le boîtier (1) moulé.

3. Tiroir suivant la revendication 1 ou 2, **caractérisé** en ce que les crochets (13, 14) aux extrémités des branches des extracteurs (3, 4) comportent des arêtes (34) contre-dépouillées.

4. Tiroir suivant l'une des revendications précédentes, **caractérisé** en ce que le module (8) plat fixé en position sur la paroi arrière comporte des broches (35) de guidage, dirigées vers l'extérieur à l'opposé du boîtier (1) moulé.
